## Europäisches Patentamt

## European Patent Office

## Office européen des brevets

(19)

(11) Veröffentlichungsnummer: **0 222 929**
**B1**

(12)

# EUROPÄISCHE PATENTSCHRIFT

(45) Veröffentlichungstag der Patentschrift:
**08.11.89**

(21) Anmeldenummer: **85114826.2**

(22) Anmeldetag: **22.11.85**

(51) Int. Cl.⁴: **F16H 55/56, F16H 13/14**

(54) **Stufenlos einstellbares Zugmittelgetriebe.**

(43) Veröffentlichungstag der Anmeldung:
**27.05.87 Patentblatt 87/22**

(45) Bekanntmachung des Hinweises auf die Patenterteilung:
**08.11.89 Patentblatt 89/45**

(84) Benannte Vertragsstaaten:
**DE FR GB IT**

(56) Entgegenhaltungen:
**EP-A- 0 100 971**
**DE-C- 1 500 371**
**FR-A- 1 254 730**
**FR-A- 2 144 597**
**FR-A- 2 356 852**
**US-A- 2 283 392**

(73) Patentinhaber: **DEERE & COMPANY, 1 John Deere Road,
Moline Illinois 61265(US)**

(72) Erfinder: **Favache, Serge, Röntgenstrasse 3,
D-6660 Zweibrücken(DE)**
Erfinder: **Kempf, Bernd, Friedhofstrasse 10,
D-6661 Althornbach(DE)**
Erfinder: **Rabung, Karl, Dorfstrasse 2,
D-6657 Gersheim(DE)**

(74) Vertreter: **Feldmann, Bernhard et al, DEERE &
COMPANY European Office, Patent Department
Steubenstrasse 36-42 Postfach 503,
D-6800 Mannheim 1(DE)**

## Beschreibung

Die Erfindung bezieht sich auf ein stufenlos einstellbares Zugmittelgetriebe, insbesondere für Landmaschinen, mit einer eingangsseitigen und einer ausgangsseitigen Zugmittelscheibe und einer in ihrem wirksamen Durchmesser veränderbaren Doppelscheibe, wobei die einander zugelegenen mittigen Scheibenhälften auf der Doppelscheibe auf wenigstens einer Nabe axial verschiebbar angeordnet sind und die Nabe mit den äußeren Scheibenhälften der Doppelscheibe fest verbunden ist.

Bei diesem bekannten Zugmittelgetriebe für Mähdrescher (DE-C 1 500 371) ist die in ihrem wirksamen Durchmesser veränderbare Doppelscheibe als Doppelkeilriemenscheibe ausgebildet, so daß sich bei ihrer Verschwenkung durch den Tragarm der wirksame Durchmesser der einen Keilriemenscheibe verringert und der wirksame Durchmesser der anderen Keilriemenscheibe zwangsläufig vergrößert. In Abhängigkeit von der Stellung der Doppelscheibe wird zwangsläufig die ausgangsseitige Zugmittelscheibe ebenfalls in ihrem wirksamen Durchmesser verändert, um eine ausreichende Riemenspannung zu erhalten. Die Verstellung der Doppelscheibe mit dem Tragarm dient zur Veränderung des Übersetzungsverhältnisses des Zugmittelgetriebes für den Antrieb des Mähdreschers. Im ganzen gesehen ist mit diesem Zugmittelgetriebe nur ein begrenztes Moment übertragbar, weshalb es sich nur für kleinere Maschinen eignet.

Auch ist eine Doppelkegelscheibe (US-A2 283 392) mit drehmomentabhängiger Anpressung bekannt, bei der eine drehmomentabhängige gemeinsame Abstützung für die jeweils linken Scheibenhälften der beiden nebeneinander angeordneten Stellscheiben vorgesehen ist. Damit sind die beiden mittigen Zwischenkegelscheiben nicht drehmomentabhängig gegeneinander abgestützt.

Die mit der Erfindung zu lösende Aufgabe wird darin gesehen, das gattungsmäßige kostengünstige Zugmittelgetriebe so auszubilden, daß auch große Drehmomentspitzen, die beispielsweise beim Arbeiten in schwierigem Gelände oder beim Anfahren auftreten können, aufgefangen werden, ohne daß das Zugmittel durchrutscht, wobei der Abrieb auf ein Minimum reduziert wird. Die Aufgabe ist nach der Erfindung gelöst worden, daß die mittigen Scheibenhälften getrennt ausgebildet, miteinander über an ihnen befestigte, in Eingriff stehende und gegeneinander verschiebbare Nockenelemente gekuppelt und mit ihren zugehörigen äußeren Scheibenhälften über Verzahnungen drehfest verbunden und relativ zueinander verdrehbar sind. Auf diese Weise wird, sobald ein Riemen bei Drehmomentspitzen zu rutschen beginnt, auf der Doppelscheibe eine der mittigen Scheibenhälften gegenüber der anderen verdreht, wodurch sich infolge der vorgesehenen Nockenelemente der Abstand zwischen den mittigen Scheibenhälften vergrößert, der Spalt für den Riemen bzw. das Zugmittel sich einengt und der Riemen in Abhängigkeit vom Drehmoment sich spannt. Infolge der Koppelung der beiden mittigen Scheibenhälften mit ihren zugehörigen äußeren Scheibenhälften wird eine Relativdrehung der jeweils zusammengehörigen und ein Zugmittel aufnehmenden Scheibenhälften vermieden und der Abrieb des Zugmittels auf ein Minimum reduziert.

Zweckmäßig ist nach der Erfindung die die äußeren Scheibenhälften aufnehmende Nabe geteilt und beide Nabenteile relativ zueinander verdrehbar, wobei jeder Nabenteil eine Verzahnung aufweist, auf der jeweils eine mittige Scheibenhälfte axial verschiebbar angeordnet ist.

Im folgenden wird die Erfindung anhand einer ein Ausführungsbeispiel darstellenden Zeichnung näher erläutert. Es zeigt:

Fig. 1 eine Teilansicht einer Erntemaschine, beispielsweise eines Mähdreschers, mit einem stufenlos einstellbaren Zugmittelgetriebe für den Fahrantrieb,

Fig. 2 das Zugmittelgetriebe gemäß Fig. 1 und

Fig. 3 eine Schnittdarstellung der Doppelscheibe des Zugmittelgetriebes.

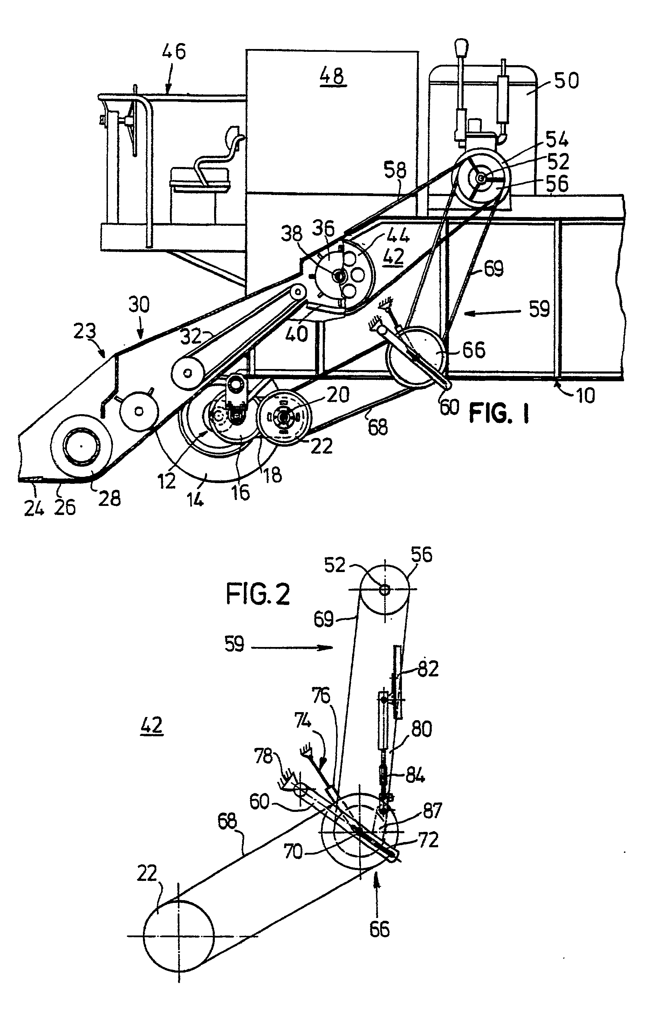

In Fig. 1 der Zeichnung ist mit 10 ein Mähdrescher nur teilweise dargestellt, an dessen vorderer Treibachse 12 Laufräder 14 angeordnet sind. Der Einfachheit halber ist in der Zeichnung nur das rechte vordere Laufrad 14 dargestellt. An der Treibachse 12 sind ein Differentialgetriebe 16 und ein ein Wechselgetriebe aufnehmendes Getriebegehäuse 18 angeordnet, mit dem von einer eine getriebene Zugmittelscheibe 22 aufnehmenden Achse 20 ausgehend verschiedene Geschwindigkeitsbereiche einstellbar sind. Die Zugmittelscheibe 22 kann auch als einstellbare, drehmomentenabhängige Zugmittelscheibe ausgebildet sein. Am vorderen Ende des Mähdreschers befindet sich eine Ernteübergungsvorrichtung 23, die aus einem Schneidwerk 24, einem Schneidwerksboden 26 sowie einer Einzugsschnecke 28 besteht, über die das aufgenommene Erntegut in ein einen Elevatorförderer 32 aufweisendes Schrägfördergehäuse 30 geleitet wird. Der Elevatorförderer 32 führt das Erntegut einer Dreschtrommel 36 zu, die auf einer Welle 38 drehbar gelagert ist. Unterhalb der Dreschtrommel 36 befindet sich ein Dreschkorb 40. Die Welle 38 der Dreschtrommel 36 lagert in Seitenwänden 42 des Mähdreschers 10, und auf einem äußeren Ende der Welle 38 befindet sich eine Antriebsscheibe 44, die über ein Zugmittel 58 mit einer Zugmittelscheibe 54 antriebsverbunden ist. Die Zugmittelscheibe 54 sowie eine neben dieser angeordnete Zugmittelscheibe 56 lagern auf einer Welle 52 einer Brennkraftmaschine 50. Die Brennkraftmaschine 50 befindet sich hinter einem am Mähdrescher 10 vorgesehenen Sammelbehälter 48. Vor dem Sammelbehälter 48 befindet sich ein Bedienungsstand 46.

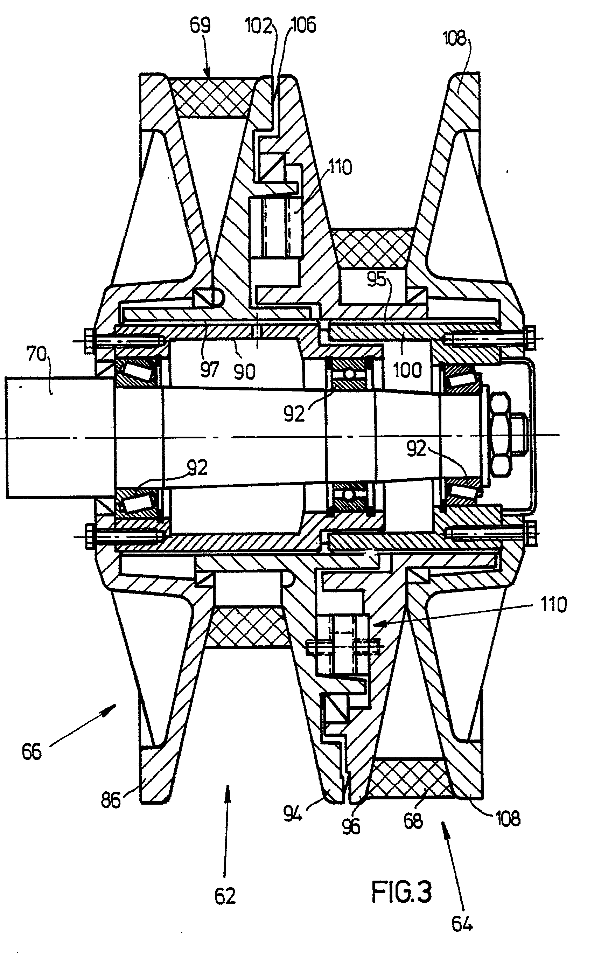

Die Treibachse 12 des Mähdreschers 10 und somit die Laufräder 14 werden von einem stufenlos einstellbaren Zugmittelgetriebe 59 angetrieben. Das Zugmittelgetriebe 59 (siehe Fig. 2) besteht aus der auf der Welle 52 angeordneten Zugmittelscheibe 56, einer auf einem schwenkbar angeordneten Tragarm 60 angeordneten, aus zwei Keilriemenscheiben 62 und 64 gebildeten Doppelscheibe 66 sowie der Zugmittelscheibe 22. Die Zugmittelscheibe 56 steht über ein Zugmittel 69 mit der einen Keilriemenscheibe 62 (Fig. 3) der Doppelscheibe 66 in Antriebsverbindung, während die zweite Keilriemenscheibe 64 über ein Zugmittel 68 mit der Zugmittelscheibe 22 antriebsverbunden ist.

Wie aus Fig. 2 hervorgeht, ist die Doppelscheibe 66 mittels einer Welle 70 in einer im Tragarm 60 vorgesehenen Langlochöffnung 72 verschiebbar angeordnet. An die Welle 70 greift eine Riemenspannvorrichtung an, die aus einer einstellbaren Spannmutter 74 besteht, die einenends an eine der Seitenwände 42 angeschlossen, anderenends in einer Spannhülse 76 drehbar aufgenommen ist. Die Spannhülse 76 ist mit der Welle 70 fest verbunden. Durch Drehen der Spannmutter 74 kann die Doppelscheibe 66 in der Langlochöffnung 72 verschoben werden und somit die notwendige Riemenspannung für das Zugmittelgetriebe 59 eingestellt werden. Der Tragarm 60 ist an eine an der Seitenwand 42 angeordnete Halterung 78 schwenkbar angeschlossen. Zur Verschwenkung des Tragarmes 60 ist ein hydraulisch beaufschlagbarer Stellzylinder 80 vorgesehen, der mit seinem einen Ende an einer an der Seitenwand 42 vorgesehenen Halterung 82, anderenends mit seiner Kolbenstange 84 an einen Hebelarm 87 angreift, der mit dem Tragarm 60 fest verbunden ist.

Durch Ein- und Ausfahren der Kolbenstange 84 des Stellzylinders 80 läßt sich der Tragarm 60 verschwenken, wodurch die wirksamen Durchmesser der beiden Keilriemenscheiben 62 und 64 entsprechend verändert werden können.

Die Keilriemenscheibe 62 weist eine äußere Scheibenhälfte 86 auf, die über Schraubenbolzen an eine Nabe bzw. Nabenteil 90 drehfest angeschlossen ist. Die Nabe 90 lagert mittels zweier Wälzlager 92 auf der Welle 70. Die linke Keilriemenscheibe 62 weist ferner eine mittige Scheibenhälfte 94 auf, die über eine Keilverzahnung 97 mit der Nabe 90 drehfest verbunden ist, jedoch derart, daß sie auf der Nabe axial verstellbar ist. An die Scheibenhälfte 94 schließt sich eine zweite mittige Scheibenhälfte 96 an, die Teil der Keilriemenscheibe 64 ist. Die zweite Scheibenhälfte 96 ist mittels einer Keilverzahnung 95 auf einer Nabe bzw. Nabenteil 100 drehfest, jedoch axial verstellbar angeordnet, der über wenigstens ein drittes Wälzlager 92 auf der Welle 70 gelagert und über Schraubenbolzen mit einer außenliegenden vierten Scheibenhälfte 108 verbunden ist, so daß die Keilriemenscheibe 64 die Scheibenhälften 96 und 108 aufweist. Auf diese Weise läßt sich die zweite Scheibenhälfte 96 gegenüber der ersten Scheibenhälfte 94 drehen sowie sich in Axialrichtung verstellen, und die aus den beiden Scheibenhälften 86 und 94 gebildete Zugmittelscheibe 62 ist auf der Welle 70 drehbar gelagert, wobei eine gegenseitige Verdrehung der beiden Scheibenhälften 86 und 94 durch die Verzahnung 97 ausgeschaltet ist. Das gleiche gilt auch für die aus den Scheibenhälften 96 und 108 gebildete Zugmittelscheibe 64.

Bei dieser Zugmittelscheibe 64 wird ebenfalls durch die Verzahnung 95 verhindert, die die Scheibenhälfte 96 mit der Scheibenhälfte 108 drehfest verbindet, daß eine gegenseitige Verdrehung der beiden Scheibenhälften stattfindet. Damit eine Antriebsverbindung zwischen der linken Keilriemenscheibe 62 und der rechten Keilriemenscheibe 64 hergestellt werden kann, sind die beiden mittigen Scheibenhälften 94 und 96 über zahlreiche alternierend an den mittigen Scheibenhälften angeordnete Nockenelemente 110 miteinander antriebsverbunden, die geneigt verlaufende Nockenflächen aufweisen. Diese bilden mit der Stirnseite 102 der Scheibenhälfte 94 bzw. der Stirnseite 106 der Scheibenhälfte 96 einen Winkel α, der vorzugsweise 40° aufweist. Es ist jedoch auch möglich, daß der Winkel α eine Größe zwischen 35° und 45° haben kann.

Im Arbeitseinsatz wird mittels der Brennkraftmaschine 50 über das Zugmittelgetriebe 59 die Achse 20 angetrieben und somit die Laufräder 14. Die für den Antrieb erforderliche Zugmittelspannung der beiden Zugmittel 68 und 69 läßt sich durch Verschieben der Doppelscheibe 66 auf dem Tragarm 60 einstellen. Hierdurch läßt sich bei normalem Arbeitseinsatz über die Doppelscheibe 66 das Antriebsmoment von der einen Keilriemenscheibe 62 ohne weiteres auf die andere Keilriemenscheibe 64 übertragen. Treten andererseits, beispielsweise bei Bergfahrten des Mähdreschers 10, Drehmomentspitzen auf und beginnt ein Riemen zu rutschen, so werden die beiden Scheibenhälften 94 und 96 und somit die entsprechenden Nockenelemente 110 gegenseitig verschoben. Dabei gleitet ein Nockenelement 110 an einer Scheibenhälfte an dem Nockenelement der anderen Scheibenhälfte entlang, so daß sich beide Nockenelemente bei geringfügiger Drehung um die Welle 70 in Axialrichtung verschieben. Hierdurch werden die Scheibenhälften 94 und 96 in Richtung der außenliegenden Stirnkanten der Zugmittel 68 und 69 bewegt und somit der Anpreßdruck zwischen den Stirnkanten der Zugmittel und der Innenoberfläche der Scheibenhälften 94 und 96 erhöht. Durch den höheren Anpreßdruck läßt sich nunmehr auch ein größer auftretendes Drehmoment ohne weiteres übertragen.

Im einzelnen werden bei erhöhtem Drehmoment die beiden Scheibenhälften 94 und 96 auseinandergedrückt, wobei die aus den Scheibenhälften 86 und 94 gebildete Keilriemenscheibe 62 sich gegenüber der aus den Scheibenhälften 96 und 108 gebildeten Keilriemenscheibe 64 so lange dreht, bis der erforderliche Anpreßdruck zwischen Zugmittel und Zugmittelscheibe bzw. die erforderliche Zugmittelspannung in Abhängigkeit von dem erhöhten Drehmoment sich eingestellt hat. Durch die Keilverzahnung 95, 97 wird dabei verhindert, daß sich die Scheibenhälften 86, 94 bzw. 96, 108 einer Keilriemenscheibe 62 bzw. 64 gegeneinander drehen. Hierdurch kann der Schlupf bzw. der Abrieb reduziert werden. Ferner wird dadurch verhindert, daß das Zugmittel auf Torsion beansprucht wird. Dies ist besonders vorteilhaft, wenn ein Zugmittel verwendet wird, in dem Kettenglieder eingelassen sind. Durch diese Anordnung wird also gewährleistet, daß sich die in dem Zugmittel eingelassenen Kettenglieder beim Schlupf nicht schräg stellen und dann nach relativ kurzer Laufdauer eine derartige Beschädigung am Zugmittel verursachen, daß dieses ausgewechselt werden muß.

Bei nachlassendem Drehmoment können die beiden Scheibenhälften 94 und 96 sich wieder aufeinander zubewegen, so daß der Reibdruck entsprechend dem nachlassenden Drehmoment verringert wird. Auf diese Weise läßt sich mit einfachen baulichen Mitteln insbesondere an der Doppelscheibe, an der normalerweise der größte Schlupf auftritt, die notwendige Zugmittelspannung entsprechend dem auftretenden Drehmoment während des Arbeitseinsatzes automatisch einstellen.

Das zuvor beschriebene Zugmittelgetriebe 59 mit der vorteilhaft ausgebildeten Doppelscheibe 66 läßt sich auch bei allen anderen Arbeitsmaschinen ohne weiteres einsetzen, die ungleichmäßigen Belastungsarten ausgesetzt sind, um somit für die Antriebsübertragung die gewünschte bzw. erforderliche Riemenspannung in optimaler Weise zur Verfügung zu stellen. Hierdurch läßt sich der Verschleiß an den Zugmitteln auf ein Minimum reduzieren, da der Schlupf an den Zugmittelscheiben klein gehalten werden kann.

## Patentansprüche

1. Stufenlos einstellbares Zugmittelgetriebe (59), insbesondere für Landmaschinen, mit einer eingangsseitigen und einer ausgangsseitigen Zugmittelscheibe (56, 22) und einer in ihrem wirksamen Durchmesser veränderbaren Doppelscheibe (66), wobei die einander zugelegenen mittigen Scheibenhälften (94, 96) auf der Doppelscheibe (66) auf wenigstens einer Nabe axial verschiebbar angeordnet sind und die Nabe mit den äußeren Scheibenhälften (86, 108) der Doppelscheibe (66) fest verbunden ist, dadurch gekennzeichnet, daß die mittigen Scheibenhälften (94, 96) getrennt ausgebildet, miteinander über an ihnen befestigte, in Eingriff stehende und gegeneinander verschiebbare Nockenelemente (110) gekuppelt und mit ihren zugehörigen äußeren Scheibenhälften (86, 108) über Verzahnungen (95, 97) drehfest verbunden und relativ zueinander verdrehbar sind.

2. Zugmittelgetriebe nach Anspruch 1, dadurch gekennzeichnet, daß die die äußeren Scheibenhälften (86, 108) aufnehmende Nabe geteilt ist und beide Nabenteile (90, 100) relativ zueinander verdrehbar sind, wobei jeder Nabenteil (90, 100) eine Verzahnung (95, 97) aufweist, auf der jeweils eine mittige Scheibenhälfte (94, 96) axial verschiebbar angeordnet ist.

## Claims

1. Continuously variable belt drive (59) especially for agricultural machines with an input side and an output side belt pulley (56, 22) and a double pulley (66) variable in its effective diameter, wherein the adjoining central sheave halves (94, 96) of the double pulley (66) are arranged axially displaceable on at least one hub and the hub is fixedly connected to the outer sheave halves (86, 108) of the double pulley, characterized in that the central sheave halves (94, 96) are formed separately, are coupled together by cam elements (110) fixed thereto, in engagement with each other and mutually displaceable, and are connected rotation fast with their corresponding outer sheave halves (86, 108) through toothing (95, 97) but rotatable relative to one another.

2. Belt drive according to claim 1, characterized in that the hub receiving the outer sheave halves (86, 108) is divided and the two hub parts (90, 100) are rotatable relative to one another, each hub part (90, 100) having a toothing (95, 97) on which the respective central sheave half (94, 96) is arranged axially slidable.

## Revendications

1. Variateur continu de vitesse à courroie (59), en particulier pour machines agricoles, comportant une poulie côté entrée et une poulie côté sortie (56, 22) et une poulie double (66) de diamètre effectif variable, les moitiés de poulie centrales rapprochées (94, 96) avec la poulie double (66) étant disposées de façon à pouvoir être déplacées axialement sur au moins un moyeu et le moyeu étant relié rigidement aux moitiés de poulie extérieures (86, 108) de la poulie double (66), caractérisé en ce que les moitiés de poulie centrales (94, 96) ont une conformation séparée, sont accouplées entre elles au moyen d'éléments à cames (110) fixés sur elles, en prise et pouvant être déplacés mutuellement, et peuvent être solidarisées en rotation avec les moitiés de poulie extérieures (86, 108) qui leur correspondent au moyen de dentures (95, 97) et tourner l'une par rapport à l'autre.

2. Variateur suivant la revendication 1, caractérisé en ce que le moyeu recevant les moitiés de poulie extérieures (86, 108) est divisé, et les deux parties de moyeu (90, 100) peuvent tourner l'une par rapport à l'autre, chaque partie de moyeu (90, 100) comportant une denture (95, 97), dentures sur chacune desquelles une moitié de poulie (94, 96) est placée de façon à pouvoir se déplacer axialement.

FIG. I

FIG. 2

FIG.3